# EUROPEAN PATENT SPECIFICATION

(11) **EP 2 381 623 B1**
(45) Date of publication and mention of the grant of the patent: **26.08.2015**
(21) Application number: 09840180.5
(22) Date of filing: 31.12.2009
(51) Int. Cl.: H04L 12/28, H04M 3/51

(54) **SYSTEM AND METHOD FOR CALL QUEUING AND PREOCCUPYING OUTBOUND CALLING**
SYSTEM UND -VERFAHREN ZUR RUFWARTESCHLANGEN UND VORABRESERVIERUNG AUSGEHENDER RUFE
SYSTÈME ET PROCÉDÉ DE MISE EN FILE D'ATTENTE D'APPEL ET D' APPEL SORTANT D'OCCUPATION PRÉALABLE

(30) Priority: 16.07.2009 CN 200910150184
(43) Date of publication of application: 26.10.2011
(73) Proprietor: ZTE Corporation, Shenzhen, Guangdong 518057 (CN)
(72) Inventor: LI, Weihua, Guangdong 518057 (CN)
(74) Representative: Benson, Christopher
(86) International application number: PCT/CN2009/076339
(87) International publication number: WO 2011/006342

(56) References cited:
- WO-A1-2008/083088
- WO-A2-2006/045729
- CN-A- 1 805 485
- CN-A- 1 882 019
- CN-A- 101 079 928
- CN-A- 101 448 224
- GB-A- 2 379 835
- US-A1- 2005 195 960
- US-A1- 2008 095 354

## Description

### TECHNICAL FIELD

The present invention relates to call queuing technologies, and particularly to, based on presence information, a call queuing system and method, and a pre-occupying outbound calling system and method.

### BACKGROUND

A call center is a specialized system where a group of agents or company customer service representatives process incoming calls and initiate outbound calls to communicate with users. A conventional call center comprises: (1) a user access system having a capability of automatic call distribution (ACD), the ACD accomplishes user call access, control and management; (2) an interactive voice response (IVR) system allowing a user to accomplish service operation based on voice prompts; (3) a computer-telephony integration server (referred to as CTI) for accomplishing call routing and queuing; and (4) agents, and etc.

Along with the development of access networks and transmission networks, there emerges a next generation call center (NGCC) based on soft automatic call distribution (SoftACD), and its usual architecture comprises the following parts: (1) SoftACD for accomplishing access of real-time services such as voice, fax and etc.; (2) an IVR/media server (MS) for accomplishing automatic service processing and providing media resources such as text to speech (TTS), automatic speech recognition (ASR), fax and etc.; (3) a CTI for accomplishing unified queuing and routing of all calls; and (4) agents for accomplishing manual service processing. The conventional call center mainly accomplishes processing of voice calls, while the NGCC can accomplish unified queuing and routing of various multimedia calls such as video, voice, chat and etc.

Currently, there exist patent applications for various media call queuing, such as Chinese patent application CN200810006687.4, which provides a video queuing method and system based on SoftACD, achieving video communications between users and agents. In this solution, a media channel is established between a user terminal and an IVR system by making video negotiations via the SoftACD. If all agents are busy while the user terminal accesses, the IVR system plays a queuing video to the user terminal; and if there is an idle agent, the SoftACD establishes a video channel between the user terminal and the agent, thus providing a video communication function between the user and the agent.

There is another Chinese patent application CN200710187815.5 which provides a method for implementing an IP call center and a video call service. The solution is that, the SoftACD submits a received video call access request to the CTI, and the CTI instructs the SoftACD to route the call access request onto an IP-IVR/MS and prompts that a call arrives; the SoftACD initiates a call to the IP-IVR/MS, a video media channel is established between the IP-IVR/MS and the user terminal via the SoftACD, and the IP-IVR/MS plays prompting multimedia information to the user via the video media channel and plays selected multimedia information to the user based on user input.

These patents mainly implement a method for implementing a new service video of a call center, and when a call is in a queuing process, the IVR system may inquire of a business & operation support system (BOSS) or a customer relationship management (CRM) system about basic user attributes, such as attribution, name, sex, customer level and other information, and take them as weight information of queuing priority.

For most call centers, one of optimal methods for lowering operation costs is to increase a first call resolution (FCR). The definition of the FCR in the art is that the consultation or problems of a customer is to be solved in a first call. For example, if your FCR is 68% (near industry average), then it means that 32% of customers will call twice or more to solve their problems.

Therefore, how to design a method for a better call queuing and routing to increase an FCR of a call center and customer satisfaction becomes a problem to be considered continuously by those skilled in the art.

US 2008/095354 provides a method of allocating calls coming into a call center from a caller location remote from the call center, receiving a call from a caller which includes information from an RFID chip located in close proximity to the caller location; decoding the information from the RFID chip to determine one or more parameters relating to the information; using said one or more parameters to allocate the call from the caller at the call center to ensure calls are handled in accordance with the parameters.

GB 2379835 provides a telephone call routing system routes a telephone call from a caller to a mobile resource which is local to the caller and available. Specifically, the mobile resource may be a taxi, such that a customer can hail a taxi, without being in the direct line of sight of a taxi driver. An automatic coordinator manages the mobile resources and callers to a call center and can automatically allocate available and nearby mobile resources to a caller, so that conversation between the caller and an operator of the mobile resource helps direct the mobile resource to the caller.

### SUMMARY

A technical problem to be solved by the present invention is to provide a call queuing system and method and a pre-occupying outbound calling system and method based on presence information, so as to increase an FCR of a call center and user satisfaction.

In order to solve the above-mentioned technical problem, the present invention provides a system for call queuing and pre-occupying outbound calling, the system, comprising:
an application server, which is used for acquiring and normalizing user presence information and initiating a request for applying for queuing to a CTI after receiving a call initiated to a call center from a user terminal; and
a CTI connected with the application server, which is used for, when a user selects manual agents, performing queuing processing on the call based on the user presence information and selecting a suitable agent for the call
the system being characterized in that the normalizing user presence information refers to that the application server performs classification processing on the user presence information according to predefined categories, and converts the user presence information into an identifier identifiable by the CTI, where the user presence information comprises terminal capability information, location information, user state information, and personal preference information.

The application server may be further used to accomplish an inquiry of a presence server about the user presence information or acquire the user presence information by parsing a session message of the call of the user terminal.

For a call initiated by a user terminal that does not support presence information, the application server may be further used to acquire the user presence information via a conventional mobile network.

The CTI is used for performing queuing processing on the call based on the user presence information, wherein specifically:
based on a terminal capability in the user presence information, the CTI determines whether to assign the call to a video agent or not; based on location information in the user presence information, the CTI assigns the call to an agent nearest to the user; based on user state information in the user presence information, the CTI assigns the call to an agent with a corresponding communication method; and based on personal preference information in the user presence information, the CTI assigns the call to an agent with a corresponding service skill.

The application server may be also used for sending a call including a uniform resource identifier of a calling terminal and user presence information to the CTI; and the CTI inquires about user attributes based on the uniform resource identifier and performs queuing processing in combination with the user presence information.

The CTI may be further used for sending a call message to an agent; and
the agent may be used for acquiring user presence information from a call message that is sent to the agent by the CTI, and displaying the user presence information.

The present invention also provides a method for call queuing and pre-occupying outbound calling, the method comprising:
a call center receiving a call initiated by a user terminal (201);
the call center acquiring and normalizing user presence information (202); and
the call center performing queuing processing on the call based on the user presence information and selects a suitable agent for the call (203),
the method being characterized in that the normalizing user presence information includes performing classification processing on the user presence information according to predefined categories and converting the user presence information into an identifier identifiable by the call center, where the user presence information comprises terminal capability information, location information, user state information, and personal preference information.

The step of the call center acquiring user presence information may comprise: for a call initiated by a user terminal that does not support presence information, the call center acquires the user presence information via a conventional mobile network.

The step of the call center acquiring user presence information may comprise: a presence server is interrogated to accomplish an inquiry about the user presence information.

The method may further comprise: the user terminal collects user presence information, and reports the collected user presence information to a presence server.

When a session message of the call initiated by the user terminal directly contains user presence information, correspondingly, that the call center acquires user presence information comprises: the call center acquires the user presence information by parsing the session message of the call.

The step of performing queuing processing on the call based on the user presence information may specifically comprise:
based on a terminal capability in the user presence information, determining whether to assign the call to a video agent; based on location information in the user presence information, assigning the call to an agent nearest to the user; based on user state information in the user presence information, assigning the call to an agent with a corresponding communication method; and based on personal preference information in the user presence information, assigning the call to an agent with a corresponding service skill.

The present invention also provides a pre-occupying outbound calling system, comprising:
a pre-occupancy module for pre-occupying a corresponding agent based on user presence information;
a call module for selecting a suitable outbound calling communication method to initiate a call based on the user presence information; and
a distribution module for assigning the call to the pre-occupied agent after the call is successful.

The system may further comprise an inquiry module for inquiring of a presence server about the user presence information.

The present invention also provides a pre-occupying outbound calling method, comprising:
a call center system pre-occupies a corresponding agent based on user presence information;
the call center system selects a suitable outbound calling communication method to initiate a call based on the user presence information; and
the call center system assigns the call to the pre-occupied agent after the call is successful.

Prior to pre-occupying a corresponding agent based on user presence information, the method may further comprise: the call center system inquires of a presence server about the user presence information.

In a call center system of an existing technology, customer service representatives do not know user state, terminal communication capability and location information, they therefore can not select a suitable communication method in real time in serving a user. This kind of condition that customer service representatives do not have adequate information can be changed in the present invention. Based on the scheme provided by the present invention, call queuing of various multimedia calls, such as video, voice, chat, etc., can be achieved in the NGCC based on presence information.

By using the present invention, when a user calls a call center or a call center makes a pre-occupying outbound call, agents of the call center can know basic information of the user at once based on presence information, and thus can select a suitable communication method to communicate with the user efficiently.

Compared with the existing call center, in this invention, more user information can be acquired at the time of call access or the call center making a pre-occupying outbound call, which is useful for the system to select a more suitable agent to serve a user so as to increases the FCR of the system and the user satisfaction.

### BRIEF DESCRIPTION OF THE DRAWINGS

Fig. 1 is a schematic diagram illustrating a structure of a call queuing system based on presence information in the present invention;
Fig. 2 is a schematic flowchart illustrating a call queuing method based on presence information in the present invention;
Fig. 3 is a schematic diagram illustrating a structure of a pre-occupying outbound call system based on presence information in the present invention;
Fig. 4 is a schematic diagram illustrating a structure of a call center system in the present invention;
Fig. 5 is a schematic flowchart of a call accessing an agent in the present invention; and
Fig. 6 is a schematic flowchart illustrating a pre-occupying outbound call in the present invention.

### DETAILED DESCRIPTION

Along with the development of the Internet and the mobile internet, a presence service emerges as the times require. The presence service is, through a certain communication method and according to a certain access rule, to acquire in real time presence information such as user state, terminal capability, location information, personal preference and other information, and select a suitable interactive method in combination with the presence information. Depending on a presence technique, a user can set the user state to various states such as calling, meeting in progress and etc., and set in the meantime some communication capabilities he/she has in a certain state and a communication method he/she hopes to adopt, so that both the calling party and the called party can select a most suitable communication method under a particular circumstance, thus increasing communication efficiency and communication quality.

The main concept of the present invention is that, an application server (AS) is added to a call center system, and the AS can specifically comprise: a presence information acquisition module for acquiring user presence information; a presence information inquiry module for accomplishing an inquiry of the presence information acquisition module about the user presence information after receiving a call initiated to the call center from a terminal; and correspondingly, a CTI is used for, when the user selects manual agents, performing queuing processing on the call based on the user presence information and selecting a suitable agent for the call.

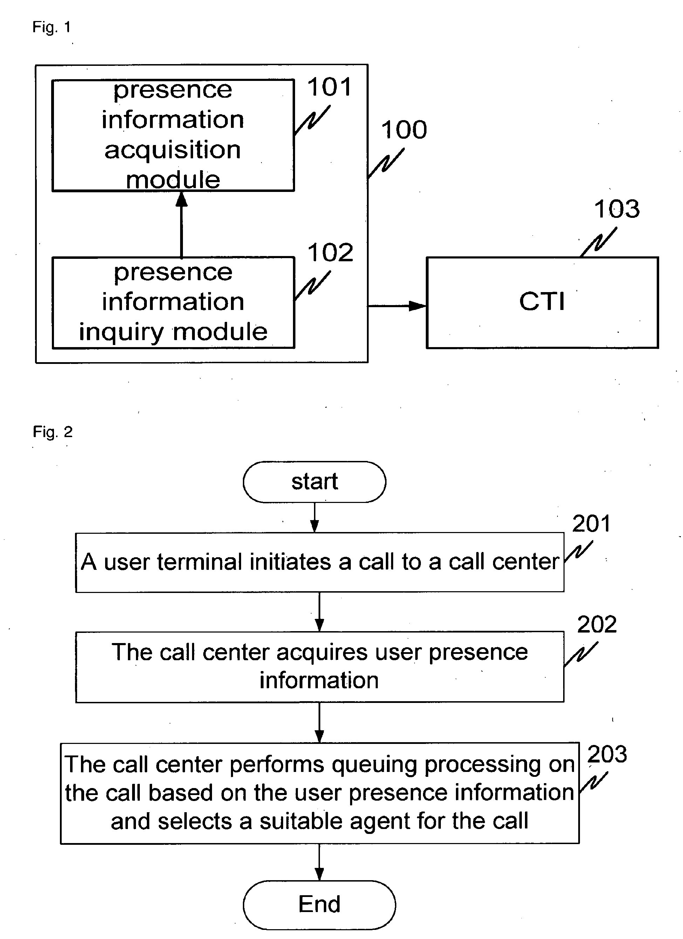

Fig. 1 is a schematic diagram illustrating a structure of a call queuing system based on presence information in the present invention. As shown in Fig. 1, the system comprises:
an AS 100, which is used to acquire user presence information and, initiate a request for applying for queuing to a CTI after receiving a call initiated to a call center from a user terminal;
the AS 100 may specifically comprise a presence information acquisition module 101 and a presence information inquiry module 102, wherein the presence information acquisition module 101 is used to acquire the user presence information; and the presence information inquiry module 102 is used to accomplish the inquiry of the presence information acquisition module 101 about the user presence information; and
a CTI 103, which is connected with the AS 100 and, when the user selects an agent, is used to perform queuing processing on the call based on the user presence information and select a suitable agent for the call.

As a preferred embodiment of the present invention, the presence information acquisition module 101 is used to accomplish the inquiry of a presence server (PS) about the user presence information or acquire the user presence information by parsing a session message of the call of the user terminal; wherein for a call initiated by a user terminal that does not support presence information, the presence information acquisition module 101 is also used to acquire the user presence information through a mobile switching center (MSC)/ visitor location register (VLR) in a conventional mobile network.

As a preferred embodiment of the present invention, the AS 100 is also used to send a call including a uniform resource identifier (URI) of a user terminal and user presence information to the CTI 103; and the CTI 103 inquiries about user attributes based on the URI and performs queuing processing in combination with the user presence information.

As a preferred embodiment of the present invention, the AS 100 further performs classification processing on the user presence information by categories and converts it into an identifier (ID) identifiable by the CTI 103.

In a preferred embodiment of the present invention:
the CTI 103 is further used for sending a call message to an agent; and
the agent is further used for acquiring user presence information from a call message that is sent to the agent by the CTI 103, and displaying the user presence information.

Specifically, in one embodiment of the present invention, the present invention makes improvements to the architecture of the call center as follows:
an AS is added to the call center system, the AS is connected with a serving call session control function unit (referred to as S-CSCF) in a core network through a standard interface, and accomplishes call access and acquires related user presence information of the call via an interface between the AS and the PS. The user presence information includes user state, terminal capability, location information, personal preference and other information, wherein the user state refers to busy state, idle state and etc., and the busy state may be calling or meeting in progress; the terminal capability refers to terminal attributes, e.g. whether to support video and terminal context such as an operating system; the location information refers to the location information of the user terminal acquired by a network system equipment; and the personal preference refers to the content filled out by a user, which is provided to customer service representatives for reference, and is used by the customer service representatives to provide active marketing to the user.

A call preprocessing module and a queuing and routing module are added to an existing CTI. The call preprocessing module changes the user presence information contained in the call and converts it into a call queuing request of the internal structure of the CTI; and the queuing and routing module performs queuing and routing based on the presence information according to an extended call queuing request.

In order to adapt to the improvement in the architecture of the call center, an implementation is that: a terminal call module is added to the user terminal, and the terminal call module can accomplish collecting and sending of the user presence information and initiate various multimedia calls such as video, voice, instant messaging, e-mail and etc. Of course, the user presence information can be acquired by using another method, and the present invention does not make a limitation thereto.

The call queuing system based on presence information in the present invention comprises an S-CSCF, a PS, an AS, a CTI, an MS, an agent and a terminal call module.

The S-CSCF is used to implement a call and session control in an IP multimedia subsystem (IMS) domain; and the S-CSCF is connected with the AS and triggers a user subscription service in the present invention.

The PS is used to collect various user presence information of a user terminal.

In order to distinguish various user presence information, an implementation is to use a phone number as a URI; of course, other URIs can be used to distinguish various user presence information, such as terminal@example.com.

The AS is the core control point of the call center, receives a call from the S-CSCF, calls an interface exposed by the PS, accomplishes an inquiry about the user presence information and normalizes the user presence information including: 1. the presence information must be filled out, wherein if the user presence information is empty or is not acquired successfully, default information will be filled by the AS, configured in the AS system and loaded to the system during initialization; 2. the user presence information acquired by the AS is acquired from a plurality of information sources, and the AS performs classification processing on the user presence information according to predefined categories, and converts it into an identifier identifiable by the CTI; and 3. for user-defined user presence information, the AS can perform personalized classification processing by way of keyword matching and other manners, and its main functions comprise the IVR function of the call center system, in addition to call access, session management, call control, resource control, automatic flow control and etc. which are already possessed by the ACD.

As another embodiment of the present invention, the AS can further store, inquire about, update and manage the user presence information locally.

The CTI accomplishes a plurality of media routing and queuing, agent state management and etc; when a user transfers from an automatic voice flow to an agent, it is necessary for the CTI to select a suitable agent for the call based on the user attributes and in combination with the user presence information and service requirements; a call preprocessing module and a queuing and routing module are added to the CTI, the call preprocessing module converts the user presence information contained in the call into a call queuing request of the internal structure of the CTI, and the queuing and routing module performs queuing and routing based on the call queuing request converted into from the user presence information.

The MS provides specific media resource service, such as multi-party conference, sound recording, announcement, voice recognition and other functions; the MS accomplishes operations such as distribution, processing and playing of the media resource under the control of the AS.

The agent provides a user interface to a customer service representative, accomplishes various call operation and service processing, acquires user presence information from a call message sent to the agent by the CTI, and displays the user presence information.

The terminal call module can collect user presence information, such as user state, terminal capability, location information and etc., set information such as user personal preference, and access the PS so as to accomplish the reporting of the user presence information.

One implementation of the terminal call module can be that it resides in such a terminal equipment that can support the IP as a mobile phone or a computer, and accesses the PS through an IP network and a gateway to accomplish the reporting of the user presence information; of course, the terminal call module can also report the user presence information through other means, for example, a conventional user terminal calls and accesses the MSC/VLR and reports the user presence information via the core network element MSC/VLR.

Fig. 2 is a schematic flowchart illustrating a call queuing method based on presence information in the present invention. As shown in Fig. 2, the method comprises:
Step 201: a user terminal initiates a call to a call center;
Step 202: the call center acquires user presence information; and
Step 203: the call center performs queuing processing on the call based on the user presence information and selects a suitable agent for the call.

In the Step 202 that the call center acquires the user presence information, for a call initiated by a terminal that does not support presence information, the user presence information is acquired via the MSC/VLR in the conventional mobile network; or the inquiry of the PS about the user presence information is accomplished via the AS. Wherein the user presence information can be collected for the user terminal and reported to the PS.

As another implementation, the session message of the call initiated by the user terminal directly contains the user presence information. Correspondingly, that the call center acquires the user presence information in the Step 202 comprises: the call center acquires the user presence information by parsing the session message of the call.

Specifically, in an embodiment of the present invention, a presence information-based method for call queuing and routing provided by the present invention is based on that the AS comprises an automatic flow control module and a manual call processing module, the method mainly comprises the following steps:
Step 1: when the user presence information changes, for example, the user state of the terminal call module changes, or the terminal call module is used in a different terminal equipment or the location of the terminal equipment changes, then the terminal call module reports the changed user presence information to the PS initiatively;
Step 2: when the terminal call module initiates a call, the S-CSCF triggers a service, the automatic flow control module of the AS plays a prompting voice or video to the user and prompts the user to make service selection such as a service inquiry, a fault complaint, a service acceptance and etc.;
Step 3: if the user selects accessing an agent, the automatic flow control module of the AS sends the call to the manual call processing module, and the manual call processing module inquiries of the PS about the user presence information of the user based on the caller's number;
Step 4: the PS inquiries about the user presence information and returns it to the manual call processing module of the AS, and the manual call processing module encapsulates the user presence information, specifically adds the user presence information to call information by categories; one specific implementation is that the terminal capability, location information and user state therein are those that must be filled out, and the user personal preference and etc. are optional;
Step 5: the manual call processing module of the AS sends the call information encapsulating the user presence information to the call preprocessing module of the CTI, the call preprocessing module converts the call information containing the user presence information into a call queuing request of the internal structure of the CTI, and sends the call queuing request to the queuing and routing module, and the queuing and routing module performs queuing according to a selected policy by integrating the user attributes with the user presence information.

The above-mentioned presence information-based call queuing method defines different queuing and routing policies based on different terminal capabilities, location information, user state and personal preference information in the user presence information: based on the terminal capability in the user presence information, the queuing and routing module determines whether the call is assigned to a video agent or not; based on the location information in the user presence information, the queuing and routing module assigns the call to an agent nearest to the user; based on the user state information in the user presence information, the call is assigned to an agent with a corresponding communication method; and based on the personal preference information in the user presence information, the call is assigned to an agent with a corresponding service skill. For example, when the user's service declaration can be dealt with more easily by using a video, if the terminal capability in the user presence information supports the video, the queuing and routing module assigns the call to a video agent; if the agents are distributed at various places, the queuing and routing module transfers the call to the agent nearest to the user.

Further, if the AS fails to inquire about some part of user presence information, the queuing and routing module can set in the queue the queuing policy corresponding to the invalid part of the user presence information to be invalid.

Further, for a conventional user terminal without the terminal call module, the user terminal can not report user presence information. The reporting of the presence information can be accomplished via a related network element in the core network, such as existing connections between the PS and the MSC/VLR, location service (LCS) and etc., which mainly comprises the following steps:
Step 1: when a conventional communication terminal which can not collect and send presence information initiates a call, the call accesses the MSC/VLR in the conventional mobile network, and accesses the call center via a media gateway control function (MGCF)/media gateway (MGW) and the S-CSCF, and the core network element MSC/VLR of the conventional mobile network reports the user presence information or the AS notifies the PS to collect the user presence information initiatively;
Step 2: when the user presence information reported by the core network element of the conventional mobile network is not sufficient, the PS sets the missing information as default information, and the subsequent processing is the same as that of the call initiated by the terminal call module.

Further, for a future communication terminal, the existing call signaling such as a session initiation protocol (SIP) and a session description protocol (SDP) can be extended. When a user terminal initiates a call, the session message of the call will directly contain presence information, and the AS will not inquire of the PS about user presence information. The process mainly comprises the following steps:
Step 1: when the user presence information changes, for example the user state of the terminal call module changes, or the terminal call module is used in a different terminal equipment, or the location of the terminal equipment changes, then the terminal call module reports the changed user presence information to the PS initiatively;
Step 2: when the terminal call module initiates a call, the S-CSCF triggers a service, the automatic flow control module of the AS plays a prompting voice to the user and prompts the user to make service selection such as a service inquiry, a fault complaint, service acceptance, accessing an agent and etc.;
Step 3: if the user selects accessing an agent, the automatic flow control module of the AS sends call information to the manual call processing module, wherein the call information contains the user presence information; one specific implementation of the user presence information may be that the user state, terminal capability, and location information are those that must be filled out, and the user personal preference and etc. are optional; the manual call processing module of the AS will normalize various user presence information sent by user terminals;
Step 4: the manual call processing module of the AS sends the normalized call information containing the user presence information to the call preprocessing module of the CTI, the call preprocessing module converts the call information containing the user presence information into a call queuing request of the internal structure of the CTI, and sends the call queuing request to the queuing and routing module, and the queuing and routing module performs queuing according to a selected policy by integrating the user attributes with the user presence information.

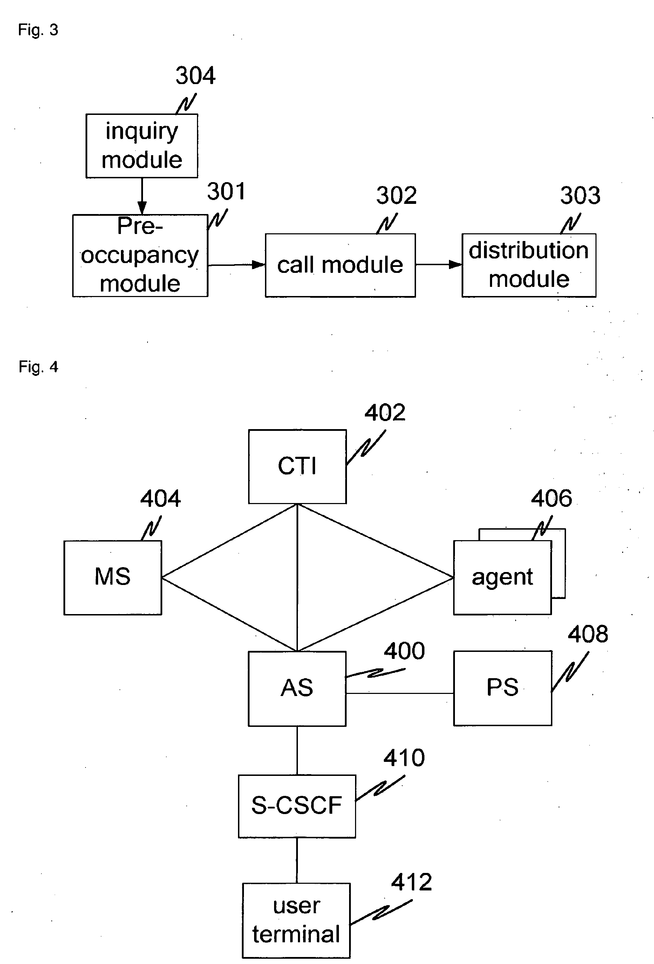

Fig. 3 is a schematic diagram illustrating a structure of a pre-occupying outbound call system based on presence information in the present invention. As shown in Fig. 3, the system comprises:
a pre-occupancy module 301, which is used to pre-occupy a corresponding agent based on user presence information;
a call module 302, which is used to select a suitable outbound call communication method to initiate a call based on the user presence information; and
a distribution module 303, which is used to assign the call to the pre-occupied agent after the call is successful.

As a preferred embodiment, the system further comprises an inquiry module 304, which is used to inquire of the PS about the user presence information.

Correspondingly, a pre-occupying outbound call method based on user presence information in the present invention comprises:
a call center system pre-occupies a corresponding agent based on user presence information;
the call center system selects a suitable outbound call communication method to initiate a call based on the user presence information; and
the call center system assigns the call to the pre-occupied agent after the call is successful.

That the call center system appoints a corresponding agent based on user presence information comprises:
when the call center system is to initiate a call to a user terminal, it inquires of the PS about the user presence information of the user according to the number of the user terminal, and selects a suitable agent to perform pre-occupying operation based on the user presence information.

Specifically, the user presence information is used in a similar way when the call center system initiates a pre-occupying outbound call. The pre-occupying outbound call is that the call center system first pre-occupies a corresponding agent based on user presence information, and then selects a suitable outbound call communication method based on the user presence information, and after the call is successful, the queuing and routing module assigns the call to the pre-occupied agent. The process mainly comprises the following steps:
Step 1: the call module of the call center system calls an interface exposed by the PS to inquire about the user's user presence information based on the caller's number, and selects a suitable agent based on the user presence information to perform pre-occupying operation;
Step 2: the call module of the call center system calls the interface exposed by the PS to inquire about the user's user presence information based on the caller's number, and selects a suitable outbound call communication method based on the user presence information to initiate a call; and
Step 3: if the call is successful, the call module of the call center system sends the call to the queuing and routing module inside the CTI, then the queuing and routing module assigns the call to the pre-occupied agent.

Thus, after a customer service representative communicates with the user, the customer service representative makes active marketing based on the personal preference information presented by the user so as to gain a higher marketing success rate.

A preferred embodiment of the present invention will be described hereinafter with reference to the drawings. It should be understood that the preferred embodiment described here is only used to illustrate and explain the present invention rather than limit the present invention.

In a specific embodiment of the present invention, Fig. 4 is a structural diagram of a system for performing routing and queuing on a call to select an agent based on user presence information according to an embodiment of the present invention. As shown in Fig. 4, the system comprises an S-CSCF 410, an AS 400, a CTI 402, a PS 408, an agent 406, an MS 404 and a user terminal 412.

CSCF defines three CSCF units such as a proxy CSCF (P-CSCF), an interrogating CSCF (I-CSCF) and a serving CSCF (S-CSCF). When a user terminal initiates a call, the P-CSCF is the first contact node which processes and forwards the received request and service. The I-CSCF can act as a connection point for all users in the network, and can also be used as a service access point for roaming users in a current network service area. The S-CSCF 410 performs a session control function, and can maintain session state information based on the needs of a network operator. The S-CSCF 410 is connected with the AS 400 through an IMS service control (ISC) interface.

The AS 400 is the core control point of the call center, receiving the call from the S-CSCF 410. Its main functions comprise: call access, session management, call control, resource control, automatic flow control and etc. The AS 400 comprises the IVR function of the call center system. In the specific embodiment, the IVR flow and call control supporting a URI should be extended. For example, the IVR flow of the current call center system is required to be changed to perform analysis processing based on a URI rather than based on a caller's phone number. The main changes are as follows: call information of the AS 400 contains the URI of the calling user terminal and user presence information; an IVR flow processing logic performs control based on the URI; and the static information such as name, sex, etc. is inquired based on the URI.

In the system, the CTI 402 is mainly a functional entity inside the call center which manages the agents and performs routing and queuing. Its function is basically the same as that of the CTI of a conventional call center, however, it is necessary to change the CTI of the conventional call center so that it supports interaction with a multi-call-center routing management module. In the present system, the CTI 402 is responsible for reporting its own state to the multi-call-center routing management module and acquiring the state of the multi-call-center routing management module. It is responsible for initiating a cross-call-center queuing and routing request to the multi-call-center routing management module, receiving a returned result, and controlling the ACD to transfer the call. It is responsible for receiving the cross-call-center request for an agent sent by the multi-call-center routing management module, performing queuing and routing to select an agent and returning the result to the multi-call-center routing management module.

The PS 408 collects various user presence information of user terminals, where the user presence information uses a phone number as the URI.

The MS 404 provides specific media resource services, such as multi-party conference, sound recording, announcement, voice recognition and other functions. The MS 404 accomplishes operation such as distribution, processing and playing of the media resource under the control of the AS 400. The MS 404 can use the media resource of the core network or the media resource self-configured by the call center.

The agent 406 accomplishes various call operation, provides a user interface to a customer service representative, such as answering a call or initiating an outbound call, and can further extract and display the user presence information based on the call information sent by the CTI 402. In the specific embodiment, an interface protocol between the agent 406 and the CTI 402 needs to be extended so as to accomplish transmission of the user presence information, for example, a presence attribute field is added to the interface call information. The interface of the agent 406 can modify control buttons based on the user presence information, for example, if the user presence information indicates that the terminal does not support a video, then a video call button is invalid.

The user terminal 412 initiates a call based on an IP call protocol such as SIP/H.323 protocol. In a specific embodiment, it is implemented by a terminal call module, which resides in a mobile phone that supports the IP or in a terminal equipment of a computer, and can collect the user presence information such as user state, terminal capability, location information and other information and set personal preference, and etc.

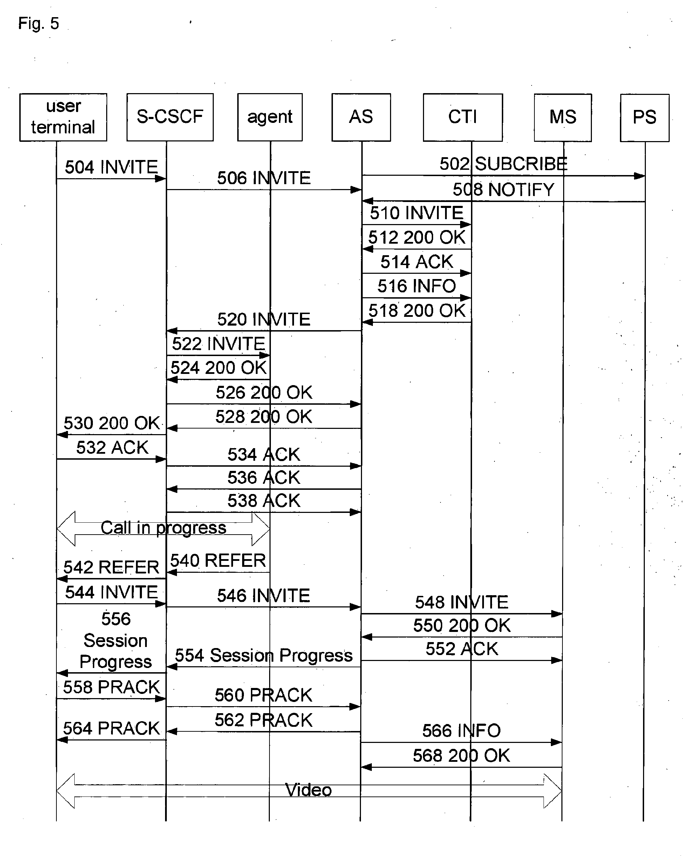

Fig. 5 is a flowchart of performing routing and queuing on a call to select an agent based on user presence information according to an embodiment of the present invention. As shown in Fig. 5, this flow comprises the following steps:
Step 502: the system is initialized, the AS is first connected with the CTI, and the AS subscribes to user presence information from the PS;
Step 504-Step 506: the user terminal initiates a session INVITE request, which arrives at the S-CSCF via the P-CSCF and is triggered and sent to the call center system by the S-CSCF;
Step 508: when the user terminal initiates this call, the user state changes, and the PS notifies the AS of the updated user presence information;
Step 510-Step 518: the AS initiates an automatic call distribution request to the CTI to request for assignment of an agent, and uses an INFO message to carry user's related information; the CTI acquires attributes such as the states and skills, etc. of agents registered with the system, selects a suitable service agent based on terminal capability, location information and other information of the user, and then makes a response with a 200 OK message and gives the SIP address of the agent;
Step 520-Step 522: the AS acquires the URI of the agent, and redirects the session INVITE request initiated by the user terminal to the agent via the S-CSCF;
Step 524-Step 530: the agent answers the INVITE with a 200 OK message and confirms a connection;
Step 532-Step 538: the user terminal returns a final ACK, at the moment a session connection is established between the user terminal and the agent;
Step 540-Step 546: in the session process, the agent intends to play a related media video to the user; the agent sends a REFER message, notifies the user terminal to transfer the session to the AS, and then the user initiates a session INVITE request to the AS;
Step 548-Step 552: the AS initiates an INVITE request to the MS and establishes a session connection;
Step 554-Step 564: the AS makes a media negotiation with the user via a 183 response containing SPD information, instructs the user to be prepared for receiving a media stream of the MS, and responds with a 200 OK message after receiving a temporary answer PRACK from the user;
Step 566- Step 568: the AS retrieves the file name of the needed media resources from a database based on the related information of the user, and uses the INFO message to instruct the MS to play a multimedia video; the MS responds to the received INFO message with a 200 OK message, acquires the resources from a resource server based on the media file name contained in the INFO message, and plays the multimedia resources.

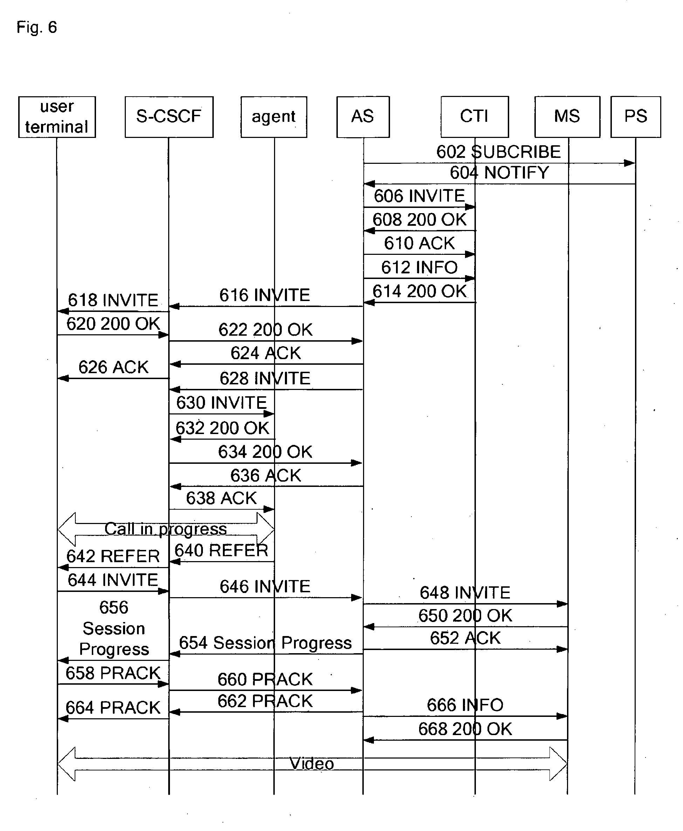

Fig. 6 is a flowchart of a pre-occupying outbound call according to an embodiment of the present invention. As shown in Fig. 6, this flow comprises the following steps:
Step 602-Step 604: the system is initialized, the AS is first connected with the CTI, the AS subscribes to user presence information from the PS; the AS initiates a subscribe request to the PS, and the PS notifies the AS of the user presence information;
Step 606-Step 614: the AS initiates an automatic call distribution request to the CTI to request for assignment of an agent, and uses an INFO message to carry user's related information; the CTI acquires attributes such as the states and skills, etc. of agents registered with the system, and selects a suitable service agent based on terminal capability, location information and other information of the user, and then makes a response with a 200 OK message and gives the SIP address of the agent;
Step 616-Step 626: the AS initiates a session INVITE request, which arrives at the user terminal via the S-CSCF;
Step 628-Step 630: the AS acquires the URI of the agent, and redirects a session INVITE request initiated by the user terminal to the agent via the S-CSCF;
Step 632- Step 634: the agent answers the INVITE with a 200 OK message and confirms a connection;
Step 636-Step 638: the user terminal returns a final ACK, at the moment a session connection is established between the user terminal and the agent;
Step 640-Step 646: in the session process, the agent intends to play a related media video to the user; the agent sends a REFER message, notifies the user terminal to transfer the session to the AS, and then the user initiates a session INVITE request to the AS;
Step 648-Step 652: the AS initiates an INVITE request to the MS and establishes a session connection;
Step 654-Step 664: the AS makes a media negotiation with the user via a 183 response containing SDP information, instructs the user to be prepared for receiving a media stream of the MS, and responds with a 200 OK message after receiving a temporary answer PRACK from the user;
Step 666-Step 668: the AS retrieves the file name of the needed media resources from a database based on the related information of the user, and uses the INFO message to instruct the MS to play a multimedia video; the MS responds to the received INFO message with a 200 OK message, acquires the resources from a resource server based on the media file name contained in the INFO message, and plays the multimedia resources.

The present invention can be applied to various call center systems supporting a layered architecture, and can interface with a fixed network and a mobile network to implement a related service. The fixed network referred to in the present invention comprises a soft switch apparatus, and the mobile network comprises GSM/UMTS, CDMAIX/CDMA2000, NGN and etc.

In 3G, 4G and subsequent mobile networks, presence will gradually become a basic user feature of a user terminal. By appropriately extending the call session description protocol, various media calls accessing the call center contain presence information, and the call center can fully utilize information such as user state, terminal capability, location information, personal preference and etc. in the user presence information to increase the FCR of the call center and thus increase user satisfaction.

It should be pointed out that, it is to be noted that it will be obvious to those skilled in the art that many variations and modifications can be made to the preferred embodiment without departing from the principle of the present invention. In addition, it is intended that this kind of variations and modifications be included in the scope of the present invention claimed in the appended claims.

## Claims

1. A system for call queuing and pre-occupying outbound calling, the system comprising:
an application server (100), which is used for acquiring and normalizing user presence information, and initiating a request for applying for queuing to a computer-telephony integration server, CTI, after receiving a call initiated to a call center from a user terminal; and
a CTI (103) connected with the application server(100), which is used for, when a user selects manual agents, performing queuing processing on the call based on the user presence information and selecting a suitable agent for the call,
the system being **characterized in that** the normalizing user presence information refers to that the application server performs classification processing on the user presence information according to predefined categories, and converts the user presence information into an identifier identifiable by the CTI, where the user presence information comprises terminal capability information, location information, user state information, and personal preference information.

2. The system according to claim 1, wherein the application server (100) is also used to accomplish an inquiry of a presence server about the user presence information or acquire the user presence information by parsing a session message of the call of the user terminal.

3. The system according to claim 2, wherein for a call initiated by a user terminal that does not support presence information, the application server is also used to acquire the user presence information via a conventional mobile network.

4. The system according to claim 1, wherein that the CTI (103) is used for performing queuing processing on the call based on the user presence information specifically refers to that:
based on the terminal capability in the user presence information, the CTI (103) determines whether to assign the call to a video agent or not; based on the location information in the user presence information, the CTI (103) assigns the call to an agent nearest to the user; based on the user state information in the user presence information, the CTI (103) assigns the call to an agent with a corresponding communication method; and based on the personal preference information in the user presence information, the CTI (103) assigns the call to an agent with a corresponding service skill.

5. The system according to claim 1, wherein the application server (100) is also used to send a call including a uniform resource identifier of a calling terminal and user presence information to the CTI (103); and the CTI (103) inquires about user attributes based on the uniform resource identifier and performs queuing processing in combination with the user presence information.

6. The system according to any of claims 1 to 5, wherein
the CTI (103) is further used for sending a call message to an agent; and
the agent is used for acquiring user presence information from a call message that is sent to the agent by the CTI(103), and displaying the user presence information.

7. The system according to any of claims 1 to 6, further comprising:
a pre-occupancy module (301), which is used to pre-occupy a corresponding agent based on the user presence information;
a call module (302), which is used to select a suitable outbound calling communication method to initiate a call based on the user presence information; and
a distribution module (303), which is used to assign the initiated call to the pre-occupied agent after the initiated call is successful.

8. A method for call queuing and pre-occupying outbound calling, the method comprising:
a call center receiving a call initiated by a user terminal (201);
the call center acquiring and normalizing user presence information (202); and
the call center performing queuing processing on the call based on the user presence information and selecting a suitable agent for the call (203);
the method being **characterized in that** the normalizing user presence information includes performing classification processing on the user presence information according to predefined categories and converting the user presence information into an identifier identifiable by the call center, where the user presence information comprises terminal capability information, location information, user state information, and personal preference information.

9. The method according to claim 8, wherein that the call center acquires user presence information comprises: for a call initiated by a user terminal that does not support presence information, the call center acquires the user presence information via a conventional mobile network; or
wherein that the call center acquires user presence information comprises: a presence server is interrogated to accomplish an inquiry about the user presence information.

10. The method according to claim 8, further comprising: the user terminal collecting user presence information, and reporting the collected user presence information to a presence server.

11. The method according to claim 8, wherein when a session message of the call initiated by the user terminal directly contains user presence information, correspondingly, that the call center acquires user presence information comprises:
the call center acquires the user presence information by parsing the session message of the call.

12. The method according to any of claims 8 to 10, wherein the process of performing queuing processing on the call based on the user presence information specifically comprises:
based on a terminal capability in the user presence information, determining whether to assign the call to a video agent or not; based on location information in the user presence information, assigning the call to an agent nearest to the user; based on user state information in the user presence information, assigning the call to an agent with a corresponding communication method; and based on personal preference information in the user presence information, assigning the call to an agent with a corresponding service skill.

13. The method according to any of claims 8 to 12, comprising:
the call center pre-occupying a corresponding agent based on the user presence information;
the call center selecting a suitable outbound calling communication method to initiate a call based on the user presence information; and
the call center assigning the initiated call to the pre-occupied agent after the initiated call is successful.

## Patentansprüche

1. System zur Anrufwarteschlangenverarbeitung und Vorbelegung abgehender Anrufe, wobei das System folgendes umfasst:
einen Anwendungsserver (100), der zum Erfassen und Normalisieren von Benutzeranwesenheitsdaten verwendet wird, sowie zum Einleiten einer Anforderung für eine Anfrage zur Warteschlangenverarbeitung an einen Computer-Telefonie-Integrations-Server, CTI, nachdem ein von einer Benutzerstation an ein Callcenter eingeleiteter Anruf empfangen worden ist; und
einen CTI (103), der mit dem Anwendungsserver (100) verbunden ist, der, wenn ein Benutzer manuelle Agenten auswählt, verwendet wird zur Warteschlangenverarbeitung des Anrufs auf der Basis von Benutzeranwesenheitsdaten sowie zur Auswahl eines geeigneten Agenten für den Anruf;
wobei das System **dadurch gekennzeichnet ist, dass** sich die Normalisierung der Benutzeranwesenheitsdaten darauf bezieht, dass der Anwendungsserver eine Klassifizierungsverarbeitung an den Benutzeranwesenheitsdaten gemäß vordefinierten Kategorien ausführt, und die Benutzeranwesenheitsdaten in einen durch den CTI identifizierbaren Bezeichner umwandelt, wobei die Benutzeranwesenheitsdaten Stationsfähigkeitsdaten, Standortdaten, Benutzerzustandsdaten und persönliche Präferenzdaten umfassen.

2. System nach Anspruch 1, wobei der Anwendungsserver (100) ferner verwendet wird, um eine Anfrage eines Präsenzservers zu den Benutzeranwesenheitsdaten auszuführen oder um die Benutzeranwesenheitsdaten zu Erfassen durch Parsen einer Sitzungsnachricht des Anrufs der Benutzerstation zu erfassen.

3. System nach Anspruch 2, wobei der Anwendungsserver für einen durch eine Benutzerstation eingeleiteten Anruf, der Anwesenheitsdaten nicht unterstützt, auch zum Erfassen der Benutzeranwesenheitsdaten über ein konventionelles mobiles Netzwerk verwendet wird.

4. System nach Anspruch 1, wobei sich die Tatsache, dass der CTI (103) zur Ausführung der Warteschlangenverarbeitung des Anrufs auf der Basis der Benutzeranwesenheitsdaten verwendet wird, spezifisch darauf bezieht, dass:
auf der Basis der Stationsfähigkeit in den Benutzeranwesenheitsdaten der CTI (103) bestimmt, ob der Anruf einem Videoagenten zugeordnet wird oder nicht; auf der Basis der Standortdaten in den Benutzeranwesenheitsdaten der CTI (103) den Anruf einem dem Benutzer am nächsten liegenden Agenten zugeordnet wird; auf der Basis der Benutzerzustandsdaten in den Benutzeranwesenheitsdaten der CTI (103) den Anruf einem Agenten mit einem entsprechenden Kommunikationsverfahren zuordnet; und auf der Basis der persönlichen Präferenzdaten in den Benutzeranwesenheitsdaten der CTI (103) den Anruf einem Agenten mit entsprechenden Service-Befähigungen zuordnet.

5. System nach Anspruch 1, wobei der Anwendungsserver (100) ferner verwendet wird, um einen Anruf mit einem Uniform Resource Identifier einer anrufenden Station und Benutzeranwesenheitsdaten zu dem CTI (103) zu senden; und wobei der CTI (103) zu Benutzerattributen anfragt auf der Basis des Uniform Resource Identifiers und eine Warteschlangenverarbeitung in Kombination mit den Benutzeranwesenheitsdaten ausführt.

6. System nach einem der Ansprüche 1 bis 5, wobei:
der CTI (103) ferner verwendet wird, um eine Anrufnachricht an einen Agenten zu senden; und
wobei der Agent verwendet wird, um Benutzeranwesenheitsdaten aus einer Anrufnachricht zu erfassen, die durch den CTI (103) zu dem Agenten gesendet wird, sowie zum Anzeigen der Benutzeranwesenheitsdaten.

7. System nach einem der Ansprüche 1 bis 6, ferner umfassend:
ein Vorbelegungsmodul (301), das zur Vorbelegung eines entsprechenden Agenten auf der Basis der Benutzeranwesenheitsdaten verwendet wird;
ein Anrufmodul (302), das für die Zuordnung des eingeleiteten Anrufs zu dem vorbelegten Agenten verwendet wird, nachdem der eingeleitete Anruf erfolgreich gewesen ist.

8. Verfahren zur Anrufwarteschlangenverarbeitung und Vorbelegung abgehender Anrufe, wobei das Verfahren folgendes umfasst:
den Empfang eines durch eine Benutzerstation (201) eingeleiteten Anrufs in einem Callcenter;
das Erfassen und Normalisieren von Benutzeranwesenheitsdaten (202) durch das Callcenter; und
das Durchführen einer Warteschlangenverarbeitung des Anrufs durch das Callcenter auf der Basis von Benutzeranwesenheitsdaten sowie die Auswahl eines geeigneten Agenten für den Anruf (203);
wobei das Verfahren **dadurch gekennzeichnet ist, dass** die Normalisierung der Benutzeranwesenheitsdaten das Durchführen einer Klassifizierungsverarbeitung an den Benutzeranwesenheitsdaten gemäß vordefinierten Kategorien aufweist sowie das Umwandeln der Benutzeranwesenheitsdaten in einen durch das Callcenter identifizierbaren Bezeichner, wobei die Benutzeranwesenheitsdaten Stationsfähigkeitsdaten, Standortdaten, Benutzerzustandsdaten und persönliche Präferenzdaten umfassen.

9. Verfahren nach Anspruch 8, wobei die Tatsache, dass das Callcenter Benutzeranwesenheitsdaten erfasst, folgendes umfasst: für einen durch eine Benutzerstation eingeleiteten Anruf, der Anwesenheitsdaten nicht unterstützt, das Erfassen der Benutzeranwesenheitsdaten durch das Callcenter über ein konventionelles mobiles Netzwerk; oder
wobei die Tatsache, dass das Callcenter Benutzeranwesenheitsdaten erfasst, folgendes umfasst: das Abfragen eines Präsenzservers, um eine Anfrage zu den Benutzeranwesenheitsdaten zu auszuführen.

10. Verfahren nach Anspruch 8, ferner umfassend: Sammeln von Benutzeranwesenheitsdaten durch die Benutzerstation, und Mitteilen der gesammelten Benutzeranwesenheitsdaten an einen Präsenzserver.

11. Verfahren nach Anspruch 8, wobei, wenn eine Sitzungsnachricht des durch die Benutzerstation eingeleiteten Anrufs direkt Benutzeranwesenheitsdaten enthält, das Erfassen von Benutzeranwesenheitsdaten durch das Callcenter entsprechend folgendes umfasst:
das Erfassen der Benutzeranwesenheitsdaten durch das Callcenter durch Parsen der Sitzungsnachricht des Anrufs.

12. Verfahren nach einem der Ansprüche 8 bis 10, wobei der Prozess des Durchführens der Warteschlangenverarbeitung an dem Anruf auf der Basis der Benutzeranwesenheitsdaten spezifisch folgendes umfasst:
auf der Basis der Stationsfähigkeit in den Benutzeranwesenheitsdaten Bestimmen, ob der Anruf einem Videoagenten zugeordnet wird oder nicht; auf der Basis der Standortdaten in den Benutzeranwesenheitsdaten Zuordnen des Anrufs zu einem dem Benutzer am nächsten liegenden Agenten; auf der Basis der Benutzerzustandsdaten in den Benutzeranwesenheitsdaten Zuordnen des Anrufs zu einem Agenten mit einem entsprechenden Kommunikationsverfahren; und auf der Basis der persönlichen Präferenzdaten in den Benutzeranwesenheitsdaten Zuordnen des Anrufs zu einem Agenten mit entsprechenden Service-Befähigungen.

13. Verfahren nach einem der Ansprüche 8 bis 12, umfassend:
Vorbelegen eines entsprechenden Agenten durch das Callcenter auf der Basis der Benutzeranwesenheitsdaten;
Auswählen einer geeigneten abgehenden Anrufkommunikationsmethode durch das Callcenter, um einen Anruf auf der Basis der Benutzeranwesenheitsdaten einzuleiten; und
Zuordnen des eingeleiteten Anrufs durch das Callcenter zu dem vorbelegten Agenten, nachdem der eingeleitete Anruf erfolgreich gewesen ist.

## Revendications

1. Système de mise en file d'attente d'appel et d'appel sortant d'occupation préalable, le système comprenant :
un serveur d'applications (100), utilisé pour acquérir et normaliser des informations de présence d'utilisateur, et initier une requête de demande de mise en file d'attente sur un serveur d'intégration téléphonie informatique, CTI, après avoir reçu un appel passé à un centre d'appels par un terminal d'utilisateur ; et
un CTI (103) connecté au serveur d'applications (100), utilisé pour, lorsqu'un utilisateur sélectionne des agents manuels, effectuer un traitement de mise en file d'attente sur l'appel en fonction des informations de présence d'utilisateur et sélectionner un agent approprié pour l'appel,
le système étant **caractérisé en ce que** la normalisation des informations de présence d'utilisateur désigne le fait que le serveur d'applications effectue un traitement de classification sur les informations de présence d'utilisateur selon des catégories prédéfinies, et convertit les informations de présence d'utilisateur en un identifiant identifiable par le CTI, les informations de présence d'utilisateur comprenant des informations de capacité de terminal, des informations de localisation, des informations d'état d'utilisateur et des informations de préférences personnelles.

2. Système selon la revendication 1, le serveur d'applications (100) étant également utilisé pour interroger un serveur de présence au sujet des informations de présence d'utilisateur ou acquérir les informations de présence d'utilisateur en analysant un message de session de l'appel du terminal d'utilisateur.

3. Système selon la revendication 2, pour un appel passé par un terminal d'utilisateur qui ne prend pas en charge les informations de présence, le serveur d'applications étant également utilisé pour acquérir les informations de présence d'utilisateur par l'intermédiaire d'un réseau mobile classique.

4. Système selon la revendication 1, le fait que le CTI (103) soit utilisé pour effectuer un traitement de mise en file d'attente sur l'appel en fonction des informations de présence d'utilisateur fait spécifiquement référence au fait que :
en fonction de la capacité de terminal dans les informations de présence d'utilisateur, le CTI (103) détermine l'opportunité d'attribuer l'appel à un agent vidéo ; en fonction des informations de localisation dans les informations de présence d'utilisateur, le CTI (103) attribue l'appel à l'agent le plus proche de l'utilisateur ; en fonction des informations d'état d'utilisateur dans les informations de présence d'utilisateur, le CTI (103) attribue l'appel à un agent ayant un procédé de communication correspondant ; et en fonction des informations de préférences personnelles dans les informations de présence d'utilisateur, le CTI (103) attribue l'appel à un agent ayant une compétence de service correspondante.

5. Système selon la revendication 1, le serveur d'applications (100) étant également utilisé pour envoyer un appel incluant un identifiant de ressource uniforme d'un terminal appelant et les informations de présence d'utilisateur au CTI (103) ; et le CTI (103) interroge au sujet d'attributs d'utilisateur en fonction de l'identifiant de ressource uniforme et effectue un traitement de mise en file d'attente en combinaison avec les informations de présence d'utilisateur.

6. Système selon l'une quelconque des revendications 1 à 5 :
le CTI (103) étant en outre utilisé pour envoyer un message d'appel à un agent ; et
l'agent étant utilisé pour acquérir des informations de présence d'utilisateur d'un message d'appel qui est envoyé à l'agent par le CTI (103) et afficher les informations de présence d'utilisateur.

7. Système selon l'une quelconque des revendications 1 à 6, comprenant en outre :
un module d'occupation préalable (301), utilisé pour occuper au préalable un agent correspondant en fonction des informations de présence d'utilisateur ;
un module d'appel (302), utilisé pour sélectionner un procédé de communication d'appel sortant approprié pour passer un appel en fonction des informations de présence d'utilisateur ; et
un module de distribution (303), utilisé pour attribuer l'appel passé à l'agent occupé au préalable après que l'appel passé est réussi.

8. Procédé de mise en file d'attente d'appel et d'appel sortant d'occupation préalable, le procédé comprenant les étapes dans lesquelles :
un centre d'appels reçoit un appel passé par un terminal d'utilisateur (201) ;
le centre d'appel acquiert et normalise des informations de présence d'utilisateur (202) ; et
le centre d'appels effectue un traitement de mise en file d'attente sur l'appel en fonction des informations de présence d'utilisateur et sélectionne un agent approprié pour l'appel (203) ;
le procédé étant **caractérisé en ce que** la normalisation des informations de présence d'utilisateur comprend les étapes consistant à effectuer un traitement de classification sur les informations de présence d'utilisateur selon des catégories prédéfinies et convertir les informations de présence d'utilisateur en un identifiant identifiable par le centre d'appels, les informations de présence d'utilisateur comprenant des informations de capacité de terminal, des informations de localisation, des informations d'état d'utilisateur et des informations de préférences personnelles.

9. Procédé selon la revendication 8, l'acquisition par le centre d'appels d'informations de présence d'utilisateur comprenant l'étape dans laquelle : pour un appel passé par un terminal d'utilisateur qui ne prend pas en charge les informations de présence, le centre d'appels acquiert les informations de présence d'utilisateur par l'intermédiaire d'un réseau mobile classique ; ou
l'acquisition par le centre d'appels des informations de présence d'utilisateur comprenant l'étape consistant à : interroger un serveur de présence au sujet des informations de présence d'utilisateur.

10. Procédé selon la revendication 8, comprenant en outre les étapes dans lesquelles : le terminal d'utilisateur collecte les informations de présence d'utilisateur, et notifie les informations de présence d'utilisateur collectées à un serveur de présence.

11. Procédé selon la revendication 8, lorsqu'un message de session de l'appel passé par le terminal d'utilisateur contient directement des informations de présence d'utilisateur, de façon correspondante, l'acquisition par le centre d'appels des informations de présence d'utilisateur comprenant l'étape dans laquelle :
le centre d'appels acquiert les informations de présence d'utilisateur en analysant le message de session de l'appel.

12. Procédé selon l'une quelconque des revendications 8 à 10, le processus de réalisation d'un traitement de mise en file d'attente sur l'appel en fonction des informations de présence d'utilisateur comprend spécifiquement les étapes consistant à :
en fonction d'une capacité de terminal dans les informations de présence d'utilisateur, déterminer l'opportunité d'attribuer l'appel à un agent vidéo ; en fonction des informations de localisation dans les informations de présence d'utilisateur, attribuer l'appel à l'agent le plus proche de l'utilisateur ; en fonction des informations d'état d'utilisateur dans les informations de présence d'utilisateur, attribuer l'appel à un agent avec un procédé de communication correspondant ; et en fonction des informations de préférences personnelles dans les informations de présence d'utilisateur, attribuer l'appel à un agent ayant une compétence de service correspondante.

13. Procédé selon l'une quelconque des revendications 8 à 12, comprenant les étapes dans lesquelles :
le centre d'appels occupe au préalable un agent correspondant en fonction des informations de présence d'utilisateur ;
le centre d'appels sélectionne un procédé de communication d'appel sortant approprié pour passer un appel en fonction des informations de présence d'utilisateur ; et
le centre d'appels attribue l'appel passé à l'agent occupé au préalable après que l'appel passé est réussi.
